# EUROPÄISCHE PATENTANMELDUNG

(11) **EP 1 006 085 A2**
(43) Veröffentlichungstag der Anmeldung: **07.06.2000**
(21) Anmeldenummer: 99122727.3
(22) Anmeldetag: 16.11.1999
(51) Int. Cl.: C02F 1/50, C02F 1/72

(54) **Verfahren zur Schwimmbadwasseraufbereitung**

(30) Priorität: 05.12.1998 DE 19856198
(71) Anmelder: Degussa-Hüls Aktiengesellschaft, 60287 Frankfurt am Main (DE)
(72) Erfinder: Fuchs, Rainer, Dr., 63776 Mömbris (DE); Huss, Michael, 65760 Eschborn (DE)

(57) **Zusammenfassung**

Die Erfindung betrifft ein Verfahren zur Schwimmbadwasseraufbereitung, umfassend Filtration des Schwimmbadwassers über ein Festbettfilter, Chlorung des Schwimmbadwassers und periodisches Rückspülen des Filters, wobei dem Spülwasser ein Desinfektionsmittel zugesetzt wird. Erfindungsgemäß wird als Desinfektionsmittel eine Peroxycarbonsäure mit ein bis sechs C-Atomen verwendet. Bevorzugt wird eine Peroxyessigsäure und/oder Peroxyameisensäure und Wasserstoffperoxid enthaltende Lösung als Desinfektionsmittel eingesetzt. Das Verfahren führt zu einer Qualitätsverbesserung des Schwimmbadwassers und des abgehenden Spülwassers.

## Beschreibung

Die Erfindung richtet sich auf ein Verfahren zur Schwimmbadwasseraufbereitung, umfassend Filtration des Schwimmbadwassers über ein Festbettfilter, Chlorung des Schwimmbadwassers und periodisches Rückspülen des Filters mit Spülwasser, dem ein Desinfektionsmittel zugesetzt wird. Der erfindungsgemäße Rückspülprozeß führt zu einer deutlich verbesserten Qualität des Schwimmbadwassers und einer geringeren Beladung des abgeleiteten Spülwassers mit Schadstoffen und zu einer verringerten Zugabe von chlorhaltigen Mitteln.

Um die Qualität von Schwimmbadwasser aufrechtzuerhalten, muß das Badewasser in einer kontinuierlichen Aufbereitungsanlage gereinigt werden, um die hygienischen Anforderungen zu erfüllen. Das Verfahren zur Schwimmbadwasseraufbereitung umfaßt die Filtration des Schwimmbadwassers über ein Festbettfilter, das als offenes oder geschlossenes Filter, insbesondere als Einbett-, Zweibett- oder Mischbettfilter ausgebildet sein kann. Kolloidal vorliegende Stoffe und ein Teil der echt gelösten Stoffe werden mit Hilfe eines Flockungsmittels, das in den Zulauf zum Filter dem Badewasser zugesetzt wird, in einen im Filter rückhaltbaren Zustand überführt. Ein Teil der echt gelösten Stoffe kann durch Chemiesorption geflockt werden. In dem sich abscheidenden Niederschlag und in den Poren des Filtermaterials werden auch Mikroorganismen zurückgehalten. Da sich solche Mikroorganismen, wie im Filter vermehren können, ergibt sich die Forderung, daß das Filter periodisch mit möglichst hoher Effizienz rückgespült werden muß. Üblicherweise werden dem zu filtrierenden Schwimmbadwasser vor der Passage durch das Filter Flockungsmittel aus der Reihe Polyaluminiumchlorid, Aluminiumsulfat, Natriumaluminat, Eisen-III-chlorid und Kupfersulfat zugesetzt. Das aus dem Filter austretende Filtrat gelangt wieder in das Schwimmbecken.

Wegen des ständigen Eintrags von Keimen durch Badende in das Schwimmbadwasser muß die Schwimmbadwasseraufbereitung auch eine wirksame Desinfektion umfassen. Üblicherweise handelt es sich hierbei um eine Chlorung, wie sie auch in der DIN 19643 niedergelegt ist, gegebenenfalls in Kombination mit einer Ozonierung. Gängige Chlorungsverfahren sind das Unterchlorigsäure-Verfahren, das Chlor-Bleichlauge-Verfahren sowie das Chlor-Chlordioxid-Verfahren. Zweckmäßigerweise erfolgt die Chlorung im zuvor genannten Filtrat.

Um die im Filter abgeschiedenen Flocken und den sich aufgrund der Organik bildenden Schleim auszutragen, und eine unkontrollierte Vermehrung von Mikroorganismen in diesen Flocken sowie in den Poren des Filtermaterials zu vermeiden, kommt dem Rückspülprozeß unter Verwendung von Spülwasser, das aus dem Kreislauf ausgeschleust wird, besondere Bedeutung zu. Die Wirksamkeit des Spülprozesses bestimmt maßgeblich die Qualität des Filtrats. In vielen Fällen wird das Verstopfungsmaterial aus den Filtern nur durch die physikalische Wirkung mit dem Wasser ausgetragen. Eine derartige Reinigung ist jedoch unvollständig, da schleimige Fällungsprodukte sowie Biomasse fest am Filtermaterial haften bleiben. Damit besteht das Risiko, daß sich häufig infektiöse Mikroorganismen stark vermehren und mit dem Filtrat ins Beckenwasser getragen werden. Um das Risiko einer Kontamination des Filters mit kritischen Mikroorganismen wie Legionella pneumophila oder Pseudomonas aeruginosa oder fäkalcoliforme Keime zu verhindern oder zumindest zu reduzieren, ist eine zusätzliche Desinfektion erforderlich. Bei der bekannten Filterdesinfektion mit Chlor wird nach einer oder mehreren Spülphasen das Spülwasser mit Chlor versetzt (etwa 10 mg/l) und nach einer Einwirkungszeit das Spülwasser in einen Wasserspeicher oder in einen Kanal abgeleitet. Die Verwendung von Chlor in der Filterdesinfektion hat eine Reihe von Nachteilen: Chlor hat zwar eine ausgezeichnete keimtötende Wirkung, jedoch lassen sich Schleim und Algen ungenügend von der Oberfläche des Filtermaterials ablösen, so daß weiterhin Mikroorganismen verborgen sind. Ein weiterer wesentlicher Nachteil ist darin zu sehen, daß durch das Zusammenwirken von Chlor mit organischen Stoffen Organohalogenverbindungen gebildet werden und damit der Gehalt an unerwünschten AOX-Substanzen zunimmt. Bei der Ableitung eines derartigen Spülwassers in die Kanalisation kann zudem die Abbauleistung in biologischen Klärstufen einer Kläranlage gemindert werden, auch durch die hohen Restmengen an weiterhin aktiven Chlorsubstanzen.

Es ist auch bekannt, anstelle von Chlor in der Filterrückspülung Ozon als Desinfektionsmittel einzusetzen. Ozon weist zwar wie Chlor eine sehr gute mikrobiozide Wirkung auf, jedoch sind zur Installation einer Ozonierungsanlage sowie für den zusätzlichen Korrosionsschutz und Sicherheitseinrichtungen erhebliche Investitionskosten erforderlich.

Bezüglich des allgemeinen Standes der Technik wird auf die Monographie 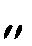 Aufbereitung von Schwimmbadwasser", Wilhelm Herschman, Krammer-Verlag, 1980 verwiesen - Kapitel 2.1 behandelt die koagulative Filtration (Seiten 34-41), Kapitel 2.9 die Filtermaterialien und Hilfschemikalien (Seiten 61-64) und Kapitel 3 die Badewasserdesinfektion. Auch die DIN 19643 lehrt die Schwimmbadwasseraufbereitung.

Aufgabe der vorliegenden Erfindung ist es, ein besseres Verfahren zur Schwimmbadwasseraufbereitung aufzuzeigen, das die Schritte Filtration über ein Festbettfilter, Chlorung des Schwimmbadwassers und periodisches Rückspülen des Filters umfaßt. Das Verfahren sollte einfach durchführbar sein, das Risiko eines Wiedereintrags gegebenenfalls infektiöser Mikroorganismen in das Badewasser mindern und die Gewässergüte des ablaufenden Spülwassers anheben, um Störungen in Klärwerken zu vermeiden und die Bedingungen der Abwassereinleitvorschriften einzuhalten ermöglichen. Das erfindungsgemäße Verfahren sollte sich zudem ohne nennenswerte zusätzliche Investition und mit geringem technischen Aufwand in bestehende Schwimmbadwasseraufbereitungssysteme integrieren lassen.

Gefunden wurde ein Verfahren zur Schwimmbadwasseraufbereitung, umfassend Filtration des Schwimmbadwassers über ein Festbettfilter, Chlorung des Schwimmbadwassers und periodisches Rückspülen des Filters mit Spülwasser, dem vor oder im Filter ein Desinfektionsmittel zugesetzt wird und Ausschleusen des gebrauchten Spülwassers, das dadurch gekennzeichnet ist, daß man als Desinfektionsmittel eine Peroxycarbonsäure mit ein bis sechs C-Atomen verwendet. Die Unteransprüche richten sich auf bevorzugte Ausführungsformen des Verfahrens.

Die Filtration und Desinfektion des Schwimmbadwassers erfolgen in an sich bekannter Weise unter Einsatz der in der Fachwelt üblichen Festbettfilter und Filtermaterialien sowie bekannter Methoden zur Chlorung des Filtrats. Bezüglich dieser Schritte wird auf die zuvor zitierte Literatur verwiesen. Übliche Filtermaterialien für die zu verwendenden Festbettfilter sind Filtersand und Filterkies, Anthrazitkohle und granulierte Aktivkohle sowie Kieselgur und Bims. In Zweischicht- und Mischbettfiltern werden unterschiedliche Filtermaterialien eingesetzt.

Durch die erfindungsgemäße Verwendung einer niederen Peroxycarbonsäure, insbesondere einer Peroxycarbonsäure und Wasserstoffperoxid enthaltenden wäßrigen Lösung, als Desinfektionsmittel ist es möglich, das Filter sehr effektiv zu desinfizieren und gleichzeitig den auf und in dem Filtermaterial heftenden Film sowie Schleim abzulösen und damit eine Wiederverkeimung und/oder Minderung der Durchlässigkeit des Filtermaterials zu verzögern. Es wird vermutet, daß die verbesserte Ablösung des Schleims von der Oberfläche des Filtermaterials maßgeblich darauf zurückzuführen ist, daß aus den im Desinfektionsmittel enthaltenden Aktivsauerstoffverbindungen Sauerstoff freigesetzt wird.

Da das erfindungsgemäß bei der Filterrückspülung eingesetzte Desinfektionsmittel frei von Chlor ist, entstehen keine chlororganischen Verbindungen - der AOX-Gehalt nimmt damit nicht zu. Der AOX-Gehalt im abgeleiteten Spülwasser entspricht damit maximal jenem, der bei Verwendung von Beckenwasser als Spülwasser im ersteren enthalten ist. Da beim erfindungsgemäßen Rückspülprozeß keine AOX-Verbindungen neu gebildet werden, treten dadurch erheblich reduzierte Probleme in Klärwerken auf. Durch die mit dem Desinfektionsmittel eingebrachten Aktivsauerstoffverbindungen werden vielmehr organische Bestandteile weiter oxidiert, so daß der CSB-Gehalt (Chemischer Sauerstoffbedarf) des abgehenden Spülwassers sogar reduziert wird. Da Filter, die nach dem erfindungsgemäßen Verfahren nach dem Spülprozeß keinen oder nur eine deutlich reduzierte Schleimmenge enthalten und damit die Menge und das Risiko des Einschlusses und wieder Austragens von Mikroorganismen reduziert ist, läßt sich die erforderliche Einsatzmenge an Chlorungsmitteln für das Beckenwasser reduzieren. Hierdurch werden die Betriebskosten abgesenkt und gleichzeitig die Belastung der Menschen durch chlorhaltige Substanzen reduziert.

Durch die verbesserte Reinigungswirkung weisen die erfindungsgemäß rückgespülten Filter eine erhöhte Leistung oder Standzeit auf, so daß das Volumen der Filter und damit deren Baugröße reduziert werden kann, was ebenfalls die Investitionskosten günstig beeinflußt, d.h., erniedrigt.

Während die im Badewasser vorkommenden Escherichia coli bei einer Konzentration von 0,02 bis 0,03 mg Chlor pro l wirksam abgetötet werden können, sind zur Bekämpfung anderer Mikroorganismen höhere Konzentrationen erforderlich, so daß in der Praxis in der Regel eine Chlorkonzentration im Bereich von 0,3 bis 0,6 mg/l eingestellt wird. Diese Konzentration reicht zwar noch aus, um Pseudomonas aeruginosa wirkungsvoll abzutöten, nicht aber die Schleimbildung zu reduzieren. Demgegenüber ist es möglich, unter Verwendung eines Peroxycarbonsäure enthaltenden Desinfektionsmittels bereits bei niedriger Konzentration den Schleim zu durchdringen und abzulösen und dabei sowohl Pseudomonas aeruginosa als auch Legionellen abzutöten und zu beseitigen.

Die erfindungsgemäß zu verwendenden Desinfektionsmittel enthalten eine oder mehrere Peroxycarbonsäuren mit 1 bis 6 C-Atomen, insbesondere Peroxyameisensäure, Peroxyessigsäure und Peroxypropionsäure. Einsetzbar sind auch Peroxyhydroxycarbonsäuren, wie Peroxymilchsäure, und wasserlösliche Mono- und Diperoxycarbonsäuren von Dicarbonsäuren, wie Bernsteinsäure, Glutarsäure und Adipinsäure und Gemische davon. Peroxycarbonsäuren werden oft vereinfacht als Percarbonsäuren bezeichnet. Vorzugsweise enthalten die Mittel Peroxyessigsäure oder ein Gemisch aus Peroxyessigsäure und Peroxyameisensäure. Gemäß einer besonders bevorzugten Ausführungsform wird als Desinfektionsmittel eine sogenannte Gleichgewichtsperoxyessigsäure eingesetzt. Hierunter sind im Gleichgewicht befindliche Reaktionsgemische zu verstehen, welche durch Umsetzung einer Carbonsäure mit wäßrigem Wasserstoffperoxid, üblicherweise in Gegenwart eines Mineralsäurekatalysators, gebildet werden. Derartige Lösungen enthalten im allgemeinen 0,1 bis 40 Gew.-% Peroxyessigsäure, 20 bis 50 Gew.-% Wasserstoffperoxid und die sich im Gleichgewicht einstellende Essigsäure. Besonders bevorzugt werden Gleichgewichtsperessigsäurelösungen mit einem Gehalt im Bereich von etwa 2 bis 15 Gew.-%, insbesondere 2 bis 5 Gew.-% Peroxyessigsäure.

Gemäß einer weiteren Ausführungsform werden zu einer Peroxyessigsäure und Wasserstoffperoxid enthaltenden wäßrigen Lösung 0,1 bis 10 Gew.-% Ameisensäure, insbesondere 0,1 bis 5 Gew.-% Ameisensäure, zugesetzt; diese Zugabe erfolgt mindestens 1 Minute, vorzugsweise 10 bis 100 Minuten vor der Verwendung des Reaktionsgemischs. Durch die Zugabe der Ameisensäure wird auch Peroxyameisensäure gebildet und es stellt sich während des Stehens des Gemisches ein neues Gleichgewicht ein. Gemäß einer alternativen Ausführungsform wird zu einer Peroxyessigsäure und Wasserstoffperoxid enthaltenden Lösung eine Quelle für Ameisensäure, beispielsweise ein Ameisensäureester oder Formiat, vorzugsweise ein Alkali- oder Erdalkalimetallformiat, zugegeben. Zweckmäßigerweise wird weniger als 1 Äquivalent Formiat pro Äquivalent Mineralsäure, welche in der Gleichgewichtsperoxycarbonsäurelösung üblicherweise in einer Menge von 0,1 bis 3 Gew.-% enthalten ist, zugegeben. Die sich durch Zugabe von Ameisensäure beziehungsweise Formiat bildende Peroxyameisensäure ist wirkungsvoller und insbesondere rascher wirksam als Peroxyessigsäure allein.

Zum Rückspülen wird dem Spülwasser zweckmäßigerweise vor dem Filter das Desinfektionsmittel zugesetzt. Vorzugsweise entspricht die Zugabemenge einer Menge von mindestens 0,01 mg, vorzugsweise 0,05 bis 5 mg Peroxycarbonsäure pro l Spülwasser. Da die Peroxycarbonsäurelösungen üblicherweise auch Wasserstoffperoxid enthalten, wird letzteres gleichzeitig dem Spülwasser zugeführt, üblicherweise in einer Menge von mindestens 1 mg/l, vorzugsweise 1 bis 100 mg/l. Peroxyessigsäure und Peroxyameisensäure enthaltende Desinfektionsmittelösungen werden vorzugsweise aus einer handelsüblichen Gleichgewichtsperoxyessigsäure und Ameisensäure oder Natriumformiat kurz vor Gebrauch vor Ort hergestellt.

Die Verwendung einer Peroxycarbonsäure enthaltenden Lösung als Desinfektionsmittel für Wasserkreisläufe ist an sich bekannt. Ihre Verwendung bei der Rückspülung von Filtern bei der eine Chlorung umfassenden Schwimmbadwasseraufbereitung wurde bisher aber nie in Betracht gezogen. Wie bereits zuvor dargestellt, führt die Verwendung von Peroxycarbonsäurelösungen zu einer außergewöhnlichen Kombination von Vorteilen, sowohl hinsichtlich der Qualität des Schwimmbadwassers als auch des abgehenden Spülwassers. Hinzukommt, daß die Standzeit des Filters ohne Risiko für die Qualität des Badewassers verlängert werden kann, da bei jedem Rückspülprozeß das Filtermaterial viel effektiver abgereinigt wird als unter Verwendung eines Desinfektionsmittels auf Chlorbasis. Durch den Abbau des Schleimmantels und damit verbesserte Eindringtiefe des Desinfektionsmittels auf Persauerstoffbasis und verbesserte Durchströmung genügt eine geringere Größe des Filters und/oder es wird eine bessere Wirkung erzielt. Schließlich ist die mögliche Verminderung des Chlorgehalts im Badewasser ein bedeutender Vorteil, den die Badenden wegen der anerkannten negativen Auswirkungen auf Haut und Augen durch Chlor zu schätzen wissen und der zudem die Umwelt schont und zur Senkung der Betriebskosten der Wasserbehandlung führt.

### Beispiel B 1 und Vergleichsbeispiele VB 1 und VB 2

Es wurden Versuche zur Ermittlung der Rückspüleffektivität an einem Filter mit folgenden technischen Parametern durchgeführt.

| | |
|---|---|
| Filtertyp: | geschlossene Bauweise |
| Filterdurchmesser (m): | 0,8 |
| Filterfläche (m²): | 0,5 |
| lineare Filtriergeschwindigkeit (m³/m²·h): | 30 |
| Filterschichthöhe (mm): | 1200 |
| Filtermaterial: | Filtersand gem. DIN 19623 |
| Körnung (mm): | 0,71 - 1,25 |

### SPÜLWASSER:

- VB 1:: herkömmlich, ausschließlich mit dem Wasser aus dem Wasserspeicher
- VB 2:: versetzt mit 10 mg/l an freiem Chlor - Zugabe als NaOCl-Lösung (nähere Einzelheiten s. Ziffer 10.2.2 der DIN 19643 - Teil 1)
- B 1:: versetzt mit 10 mg/l einer wäßrigen Gleichgewichtsperoxyessigsäurelösung mit einem Gehalt von 2 Gew.-% Peroxyessigsäure und 48 Gew.-% Wasserstoffperoxid (= Clarmarin® 503 der Degussa AG)

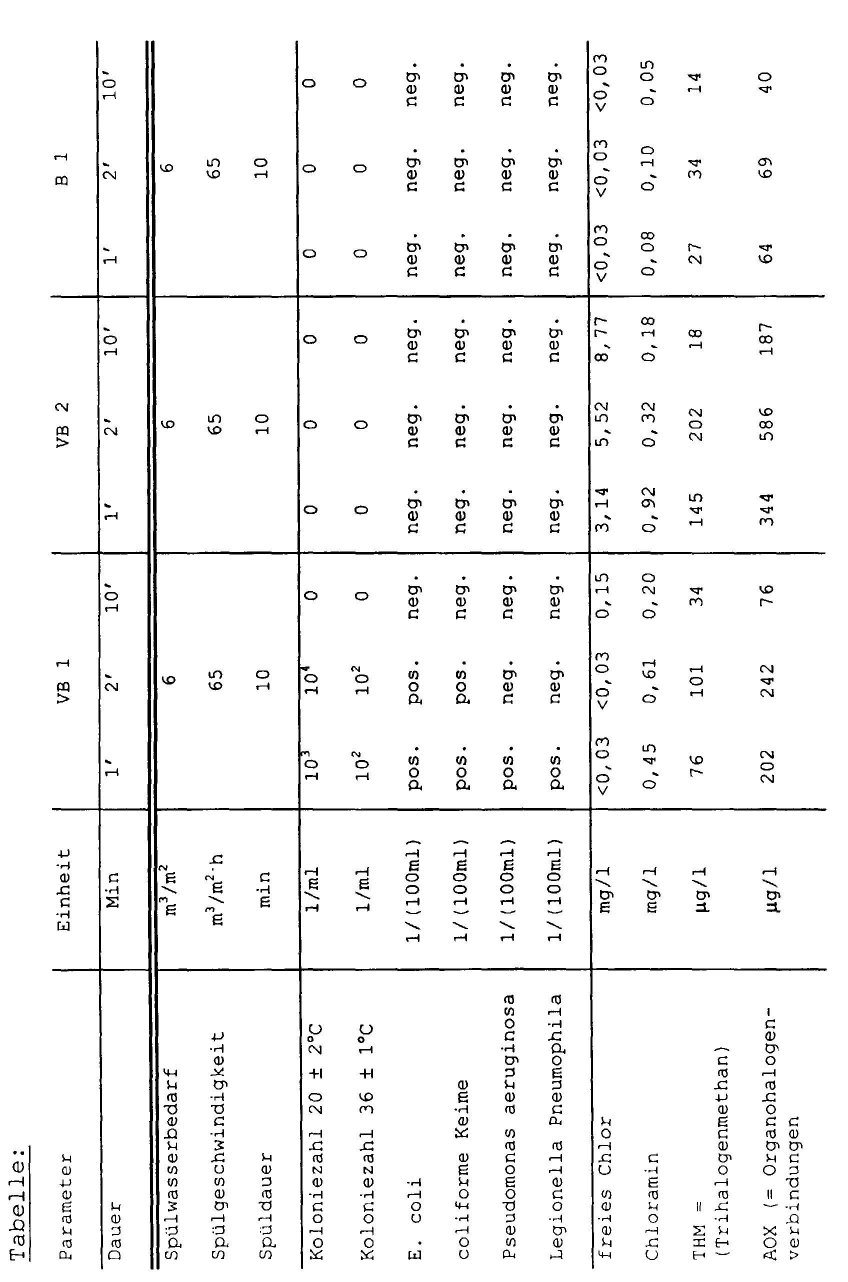

Aus dem Vergleichsbeispiel VB 1 folgt, daß eine längere Spülzeit nötig ist, um zuverlässig keimfreies Wasser zu erhalten; zudem enthält das abgehende Spülwasser erhebliche Mengen an leicht und schwer abbaubaren chlororganischen Verbindungen.

Aus dem Vergleichsbeispiel VB 2 folgt, daß die Zugabe eines Desinfektionsmittels eines zugelassenen Chlor-Produkts (NaOCl) zwar eine ausreichende Effektivität des Austrags mikrobieller Verschmutzungen gestattet, jedoch entstehen dadurch gravierende Nachteile, da im Filterbett selbst schon während des jeweiligen Rückspülvorgangs Organohalogenverbindungen (= Zunahme des AOX-Wertes) gebildet werden. Es sagt dies aber nichts über den Verbleib der Mikroorganismen im Schleim aus.

Die erfindungsgemäße Filterspülung gemäß Beispiel B 1 unter Verwendung einer Gleichgewichtsperoxyessigsäure als Desinfektionsmittel führt
- zu einer weitgehend vollständigen Lösung der organischen Verschmutzung vom Korn, wodurch eine verlängerte Filterstandzeit möglich wird;
- zu einer weitgehend vollständigen Keimabtötung von Mikroorganismen schon nach kurzer Rückspüldauer durch die im Mittel vorhandenen Peroxyverbindungen;
- zu einer Verminderung des Austrags an Organohalogenverbindungen und somit zu einer effektiven Schonung der Umwelt und Einhaltung der Abwassereinleitbedingungen.

## Patentansprüche

1. Verfahren zur Schwimmbadwasseraufbereitung, umfassend Flitration des Schwimmbadwassers über ein Festbettfilter, Chlorung des Schwimmbadwassers und periodisches Rückspülen des Filters mit Spülwasser, dem vor oder im Filter ein Desinfektionsmittel zugesetzt wird, und Ausschleusen des gebrauchten Spülwassers,
dadurch gekennzeichnet,
daß man als Desinfektionsmittel eine Peroxycarbonsäure mit ein bis sechs C-Atomen verwendet.

2. Verfahren nach Anspruch 1,
dadurch gekennzeichnet,
daß man als Desinfektionsmittel eine Wasserstoffperoxid und eine Peroxycarbonsäure, insbesondere Peroxyessigsäure und/oder Peroxyameisensäure, enthaltende wäßrige Lösung in einer Menge entsprechend mindestens 0,01 mg Peroxycarbonsäure und mindestens 1 mg Wasserstoffperoxid pro l Spülwasser verwendet.

3. Verfahren nach Anspruch 1 oder 2,
dadurch gekennzeichnet,
daß man das Desinfektionsmittel, insbesondere eine Gleichgewichts-Peroxyessigsäure, vor dem Filter dem Spülwasser zusetzt.

4. Verfahren nach Anspruch 2,
dadurch gekennzeichnet,
daß man zu einer Gleichgewichts-Peroxyessigsäure 0,1 bis 5 Gew.-% Ameisensäure oder eine in der Gleichgewichts-Peroxyessigsäure Ameisensäure freisetzende Verbindung, insbesondere ein Alkalimetallformiat, zugibt und das Gemisch vor Zugabe zum Spülwasser mindestens 1 Minute, insbesondere 10 bis 100 Minuten, reagieren läßt. 5. Verfahren nach einem der Ansprüche 1 bis 4,
dadurch gekennzeichnet,
daß man das Desinfektionsmittel in einer Menge entsprechend 0,05 bis 5 mg Peroxycarbonsäure und 1 bis 100 mg Wasserstoffperoxid pro l Spülwasser zusetzt. 6. Verfahren nach einem der Ansprüche 1 bis 5,
dadurch gekennzeichnet,
daß man als Desinfektionsmittel eine wäßrige Lösung mit einem Gehalt von 0,1 bis 15 Gew.-% , insbesondere 1 bis 5 Gew.-%, Peroxyessigsäure, 20 bis 50 Gew.-% Wasserstoffperoxid und 0 bis 5 Gew.-% Peroxyameisensäure verwendet.
